# EUROPEAN PATENT APPLICATION

(11) **EP 4 336 633 A1**
(43) Date of publication of application: **13.03.2024**
(21) Application number: 22832716.9
(22) Date of filing: 06.06.2022
(51) Int. Cl.: H01M 50/15, H01M 50/342

(54) **BATTERY CASE**

(30) Priority: 29.06.2021 JP 2021107457
(71) Applicant: Nippon Light Metal Co., Ltd., Minato-ku Tokyo 105-0004 (JP); Soode Nagano Co., Ltd., Okaya-shi, Nagano 394-0084 (JP)
(72) Inventor: MORIYAMA Yoshihiko, Shizuoka-shi, Shizuoka 421-3203 (JP); FUJITA Kazuyuki, Inazawa-shi, Aichi 492-8144 (JP); HACHISU Takuma, Tokyo 105-0004 (JP); PIAO Donghai, Tokyo 105-0004 (JP); CHIGUSA Tatsuya, Tokyo 105-0004 (JP); SODE Takayuki, Okaya-shi, Nagano 394-0084 (JP)
(74) Representative: Kiwit, Benedikt
(86) International application number: PCT/JP2022/022718
(87) International publication number: WO 2023/276558

(57) **Abstract**

Provided is a battery case which preferably corresponds to increases in size and thickness of the battery case. The battery case is made of metal provided with an explosion-proof valve. The explosion-proof valve is continuous with a plate part configuring the battery case. The explosion-proof valve includes a folded part formed by folding the plate part, a thin plate part which is continuous with the folded part and arranged inside the folded part, a thick plate part which is continuous with the thin plate part and formed thicker than the thin plate part in the middle of the explosion-proof valve, and a breaking groove which is arranged in the thin plate part and configured to rupture when a predetermined pressure is exerted thereon.

## Description

### BACKGROUND OF INVENTION

### 1. Technical Field

The present invention relates to a battery case.

### 2. Description of Related Art

A secondary battery such as a lithium-ion secondary battery includes a battery case which houses electrodes and an electrolyte. In such secondary batteries, when an internal gas is generated inside a battery case due to some defect, an internal pressure may rise to an abnormal level. Therefore, an explosion-proof valve which immediately releases an internal gas is included in a battery case when abnormality in pressure occurs inside the battery case.

Conventionally, such an explosion-proof valve is produced separated from a battery case. After production thereof, the explosion-proof valve is attached to the battery case by welding or the like. This procedure makes production steps complicated, leading to a disadvantage of an increase in production costs. Therefore, attachment of an explosion-proof valve to a battery case is not performed after production thereof in a method for producing a battery case according to Patent Document 1. In the method, instead, an explosion-proof valve is directly formed via forge processing on a face (i.e., a plate part) configuring the battery case to simplify the production steps.

The explosion-proof valve of the battery case disclosed in Patent Document 1 is formed including a thin plate part in the middle of the battery case via forge processing. Further, a breaking groove is formed surrounding the thin plate part. Additionally, a folded part is formed outside the breaking groove. This configuration allows a small pressure change exerted on the battery case at the thin plate part and the folded part to be absorbed and controlled so as not to make the breaking groove rupture by such a small pressure change.

### Prior Art Document

### Patent Document

Patent Document 1: Japanese unexamined patent publication No.2012-109222.

### SUMMARY OF INVENTION

Associated with promotion of an electric vehicle accelerated in the global market including China and European countries, a capacity demanded for a battery is rapidly increased from a viewpoint of electricity consumption optimized by efficiency in travel distance and charge/discharge operation. Thereby, an increase in size of a battery is accelerated and a plate thickness of a battery case is also increased corresponding to the increase in size of the battery case. Associated with the increase in size of the battery case, an internal gas should be released from the battery case more rapidly than ever when abnormality occurs in the battery. Thus, an area of an opening part is needed to be enlarged when abnormality in pressure occurs in the battery.

Further, when an explosion-proof valve is formed by forge processing in a battery case, a plate thickness of the explosion-proof valve is needed to be reduced. However, this process raises a problem that reduction of the plate thickness leaves excess plate metal corresponding to a reduced amount of the plate metal. That is, the more a plate thickness of a battery case is increased, the more excess plate metal is left when an explosion-proof valve is formed. This raises a problem.

Therefore, the present invention is directed to providing a battery case capable of preferably corresponding to increases in size and thickness of the battery case.

The present invention has been made to solve the above described problem. Provided is a battery case made of metal having an explosion-proof valve. The explosion-proof valve includes a folded part which is continuous with a plate part configuring the battery case and formed by folding the plate part; a thin plate part which is continuous with the folded part and provided inside the folded part; a thick plate part which is continuous with the thin plate part, formed thicker than the thin plate part and located at the middle of the explosion-proof valve; and a breaking groove which is provided at the thin plate part and is configured to rupture when a predetermined pressure is exerted thereon.

According to the present invention, an arrangement of the thick plate part at the middle of the explosion-proof valve enables the thick plate part to receive excess plate metal generated when forge processing is performed. Further, an arrangement of the receiving part of plate metal at the middle of the explosion-proof valve enables stabilization of forge and mold processing. As a result, those arrangements enable a thickness and shape of a peripheral portion of the explosion-proof valve to be more easily stabilized, allowing the explosion-proof valve to reliably rupture when abnormality in pressure occurs. Accordingly, it is possible to preferably correspond to increases in size and thickness of the battery case.

Further, preferably the folded part and the thin plate part are formed in a circular shape or an elliptical shape (e.g., including ellipse and oval). Moreover, preferably the thick plate part has a similar shape to the folded part and the thin plate part.

According to the present invention, it is possible to let the explosion-proof valve more certainly rupture when abnormality in pressure occurs.

Further, preferably a concave groove in an arc shape is formed outside the thick plate part.

According to the present invention, a separate arrangement of the concave groove from the breaking groove enables an operating pressure and a rupturing spot to be easily controlled.

Further, a thickness of the thick plate part is preferably set in a range from 1/1.1 to 1/2 of a thickness of the plate part. Moreover, an area of the thick plate part is preferably set in a range from 1/5 to 1/10 of an area of the thin plate part.

A battery case according to the present invention can preferably correspond to increases in size and thickness thereof.

### BRIEF DESCRIPTION OF DRAWIINGS

Fig. 1 is a perspective view showing a battery case according to the first embodiment of the present invention.
Fig. 2 is a plan view showing an explosion-proof valve of the first embodiment.
Fig. 3 is a cross-sectional view showing the explosion-proof valve of the first embodiment.
Fig. 4 is an enlarged cross-sectional view showing the explosion-proof valve of the first embodiment.
Fig. 5 is a flowchart showing a method for producing a member of the battery case of the first embodiment.
Fig. 6 is a half cross-sectional view showing a first half of a base molding step in the method for producing the member of the battery case of the first embodiment.
Fig. 7 is a half cross-sectional view showing a second half of the base molding step in the method for producing the member of the battery case of the first embodiment.
Fig. 8 is a half cross-sectional view showing a first half of an extension molding step in the method for producing the member of the battery case of the first embodiment.
Fig. 9 is a half cross-sectional view showing a second half of an extension molding step in the method for producing the member of the battery case of the first embodiment.
Fig. 10 is a half cross-sectional view showing a first half of a bending step in the method for producing the member of the battery case of the first embodiment.
Fig. 11 is a half cross-sectional view showing a second half of a bending step in the method for producing the member of the battery case of the first embodiment.
Fig. 12 is a half cross-sectional view showing a first half of a preliminary folding step in the method for producing the member of the battery case of the first embodiment.
Fig. 13 is a half cross-sectional view showing a second half of a preliminary folding step in the method for producing the member of the battery case of the first embodiment.
Fig. 14 is a half cross-sectional view showing a first half of a main folding step in the method for producing the member of the battery case of the first embodiment.
Fig. 15 is a half cross-sectional view showing a second half of a main folding step in the method for producing the member of the battery case of the first embodiment.
Fig. 16 is a half cross-sectional view showing a breaking groove molding step in the method for producing the member of the battery case of the first embodiment.
Fig. 17 is a plan view showing an explosion-proof valve of the second embodiment according to the present invention.
Fig. 18 is a cross-sectional view of the line I-I in Fig. 17.
Fig. 19 is a plan view showing an explosion-proof valve of the third embodiment according to the present invention.
Fig. 20 is a cross-sectional view of the line II-II in Fig. 19.
Fig. 21 is a cross-sectional view of the line III-III in Fig. 19.

### DESCRIPTION OF EMBODIMENTS

### [First Embodiment]

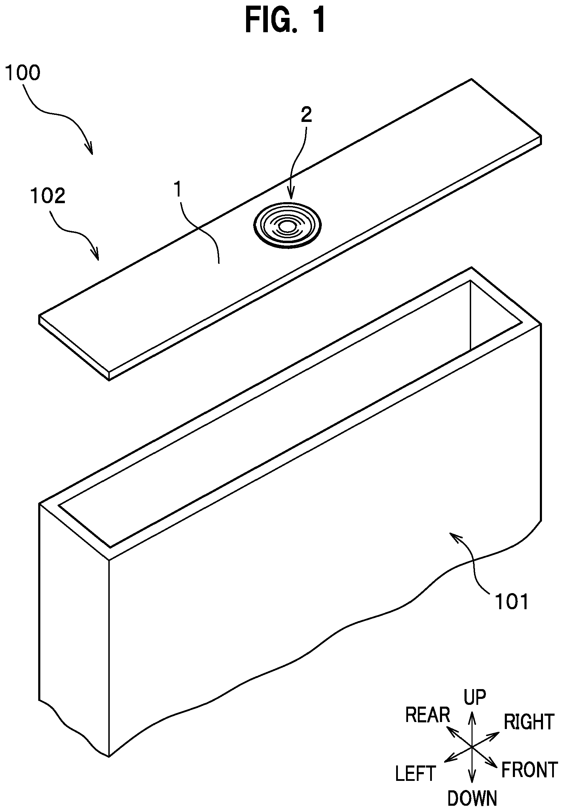

A method for producing a battery case and a battery case member of the first embodiment according to the present invention will be described in detail referring to the attached drawings. The following embodiments and variations can be appropriately combined. As shown in Fig. 1, a battery case 100 is a hollow vessel made of metal formed by joining a case 101 and a battery case lid 102 via welding. The battery case 100 is formed of, for example, aluminum, an aluminum alloy, copper, and a copper alloy or the like.

Electrodes and an electrolyte are housed inside the battery case 100. The case 101 looks a rectangle in plan view with a bottomed cylindrical shape. The battery case lid 102 is a rectangular plate member covering an opening of the case 101. Here, in the description, the directions of up, down, right, left, front, and rear are as indicated by the arrows in Fig. 1. It should be noted that those directions do not limit any direction of the present invention.

The battery case lid 102 includes a plate part 1 and an explosion-proof valve 2. The explosion-proof valve 2 is integrally formed in the middle of the plate part 1 with a rectangular shape in plan view. The explosion-proof valve 2 is a valve designed to rupture when a pressure of an internal gas reaches a predetermined value and to release the internal gas to outside.

The explosion-proof valve 2 may be provided at any place so long as the place is located in a plate part (e.g., a bottomed plate part, a side plate part and a lid plate part). In the present embodiment, an example that the explosion-proof valve 2 is arranged at a lid plate part (i.e., battery case lid 102) will be shown. Here, a shape of the battery case 100 is just an example. The battery case 100 may have other shapes including a cylindrical, elliptical and polygonal cylindrical shape and so on.

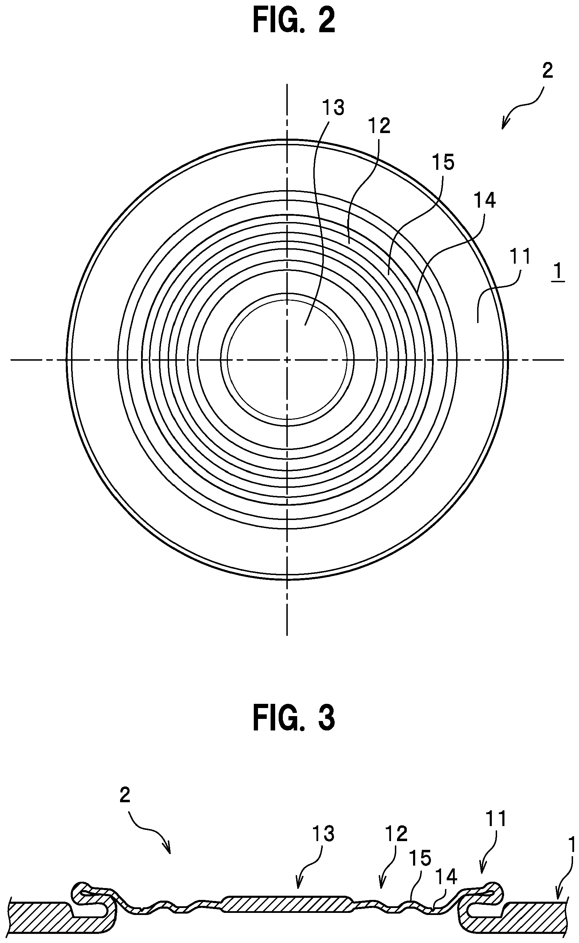

The explosion-proof valve 2 includes a folded part 11, a thin plate part 12, a thick plate part 13, a breaking groove 14 and a convex part 15 as shown in Figs. 2 and 3. The folded part 11 is continuous with the plate part 1 and a member folded evenly. In the present embodiment, the folded part 11 has a circular shape in plan view (i.e., a ring shape). In this embodiment, the folded part 11 has a three-layer structure and becomes thinner as close to an upper layer.

The thin plate part 12 is continuous with the folded part 11 and a member in a thin plate shape formed inside the folded part 11. A thickness of the thin plate part 12 is thinner than that of the plate part 1. In this embodiment, the thin plate part 12 has a circular shape in plan view. A thickness of the thin plate part 12 may be appropriately set corresponding to an operating pressure when an internal pressure of the battery case is released. The thin plate part 12 is formed at the approximately same height as an upper surface of the plate part 1.

The thick plate part 13 is continuous with the thin plate part 12 and a member arranged in the middle of the explosion-proof valve 2. A thickness of the thick plate part 13 is larger than that of the thin plate part 12. In this embodiment, the thick plate part 13 has a circular shape in plan view. The thick plate part has an approximately similar shape to the folded part 11 and the thin plate part 12. Since the thick plate part 13 is arranged in the middle of the explosion-proof valve 2, the thick plate part 13 is easily subject to an internal pressure of the battery case 100.

A shape of the thick plate part 13 may be appropriately set. The thick plate part 13, the folded part 11 and the thin plate part 12 may be different in shape from each other. A thickness of the thick plate part 13 may be appropriately set. Preferably, a thickness of the thick plate part is in the range from 1/1.1 to 1/2 of that of the plate part 1. An area of the thick plate part 13 is preferably in the range from 1/5 to 1/10 of that of the thin plate part 12.

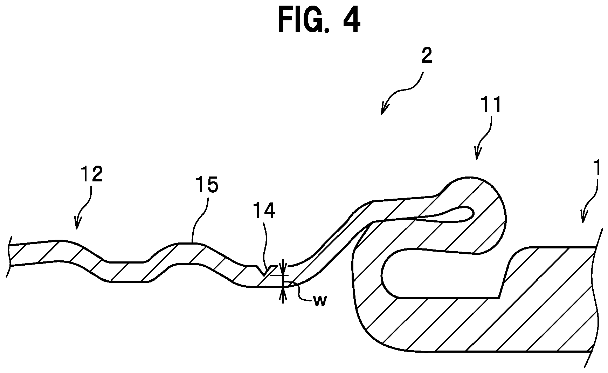

As shown in Fig. 4, the breaking groove 14 is formed on an upper surface of the thin plate part 12 along a circumference direction all over between the folded part 11 and the convex part 15 (i.e., thick plate part). The breaking groove 14 has a circular shape in plan view. A cross-sectional shape of the breaking groove 14 is not specifically limited. In the present embodiment, the cross-section has a V-shape. A depth of the breaking groove 14 (i.e., a depth relative to a plate thickness of the thin plate part 12) may be appropriately set depending on an operating pressure to be set. Further, a plurality of the breaking grooves 14 may be present.

As shown in Fig. 4, the convex part 15 is a part convex upward from an upper surface of the thin plate part 12. The convex part 15 is formed along a circumferential direction all over between the thick plate part 13 and the breaking groove 14. The convex part 15 has a circular shape in plan view (i.e., a ring shape). The convex part 15 is a member for controlling strength of the thin plate part 12. The convex part 15 may protrude downward. A plurality of the convex parts 15 may be present, or the convex part 15 may be omitted.

Next, a method for producing a battery case member (e.g., a battery case lid) according to the present embodiment will be described. In the present embodiment, a method for producing the battery case lid 102 will be exemplified. However, any parts may be exemplified so long as the part is a plate part (a member) configuring a face of the battery case 100.

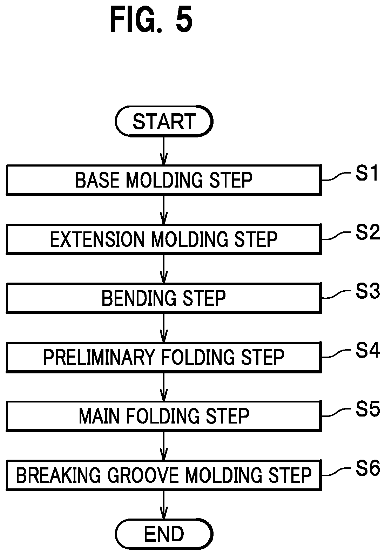

As shown in Fig. 5, the method for producing the battery case member includes a base molding step S1, an extension molding step S2, a bending step S3, a preliminary folding step S4, a main folding step S5, and a breaking groove molding step S6. In each step, a product is molded step-by-step via changing lower and upper molds having different shapes.

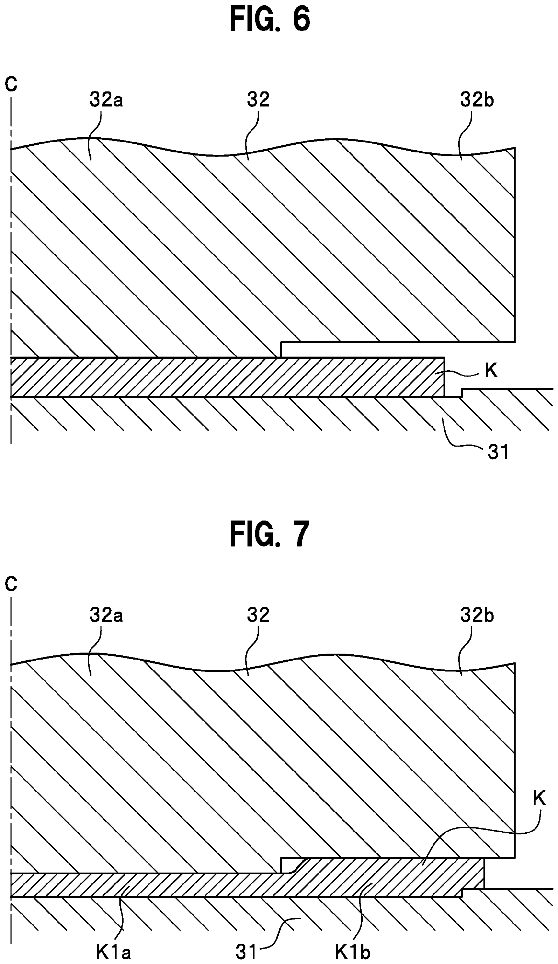

As shown in Figs. 6 and 7, the base molding step S1 includes a step of pressing a metal plate K by a first lower mold 31 and a first upper mold 32 to mold a reduced thickness part K1a and an increased thickness part K1b. The first upper mold 32 faces the first lower mold 31 in a vertical direction. The first upper mold 32 has a convex shape toward the first lower mold 31. That is, a lower end surface of an outside part 32b of the first upper mold 32 is located slightly higher than a lower end surface of an inside part 32a.

As shown in Fig. 7, when the metal plate K is pressed by the first lower mold 31 and the first upper mold 32, a protrusion shape of the first upper mold 32 makes metal of the metal plate K thus pressed flow outward, thereby to make the increased thickness part K1b of the metal plate K thicker than the reduced thickness part K1a.

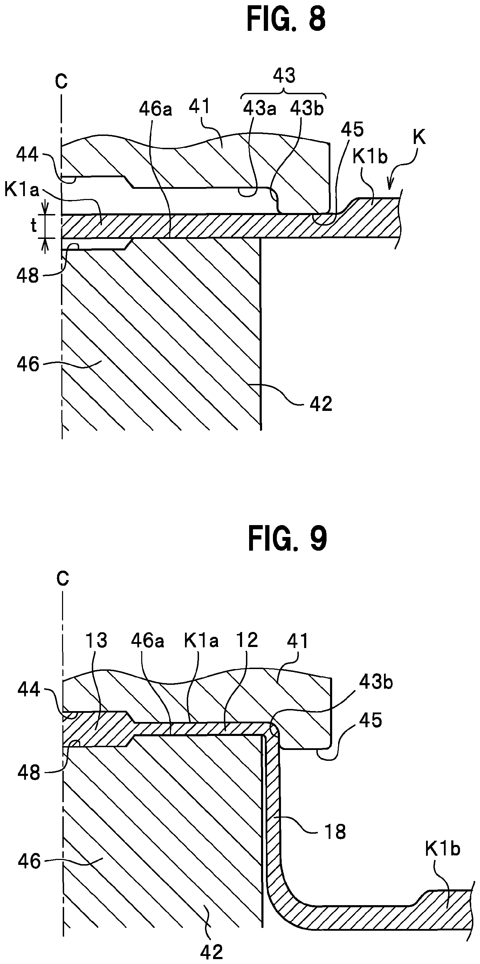

As shown in Figs. 8 and 9, the extension molding step S2 is a step of processing the metal plate K to mold the thin plate part 12, the thick plate part 13 and the cylindrical wall part 18. In the extension molding step S2, an extension molding die 41 working as an upper mold and an extension molding punch 42 working as a lower mold are used.

The extension molding die 41 includes a concave part 43 and a first cavity 44. The concave part 43 has a circular shape in plan view, including a bottom face 43a, a side face 43b rising from the bottom face 43a. Further, the extension molding die 41 includes an end face 45 which extends outward from the side face 43b. An internal diameter of the concave part 43 is larger than an external diameter of the extension molding punch 42. An external diameter of the extension molding die 41 is smaller than an external diameter of the reduced thickness part K1a of the metal plate K. Further, near the center C of the concave part 43, the first cavity 44 which is further recessed from the bottom face 43a and has a circular shape in plan view is formed. The first cavity 44 is a part to mold the thick plate part 13.

The extension molding punch 42 is arranged facing the extension molding die 41 and putting the reduced thickness part K1a of the metal plate K therebetween. The extension molding punch 42 includes a body part 46 and a pressing face 46a. The body part 46 has a cylindrical shape. The pressing face 46a is provided at an end of the body part 46. Near the center C of the pressing face 46a, a second cavity 48 which is recessed in a circular shape in plan view is formed. The second cavity 48 faces the first cavity 44 and is a part to mold the thick plate part 13.

As shown in Fig. 8, while putting the metal plate K between the bottom face 43a of the extension molding die 41 and the pressing face 46a of the extension molding punch 42, the metal plate K is being pressed without any restriction. As shown in Fig. 9, when the extension molding punch 42 is further pushed to the extension molding die 41, the reduced thickness part K1a of the metal plate K is further extended becoming thinner step-by-step, thereby to mold the thin plate part 12. At the same time, a peripheral part of the reduced thickness part K1a is bent downward by the side face 43b and the end face 45. A part of excess metal left when the thin plate part 12 is molded flows into a space formed by the first cavity 44 and the second cavity 48, and the thick plate part 13 is molded. The remaining metal is gradually extended to be pushed radially from the center of the extension molding punch 42. The pushed metal is touched and guided by the side face 43b of the concave part 43, so that a moving direction thereof is changed in a vertical direction and the pushed metal flows downward in a vertical direction. This processing molds the thin plate part 12, the thick plate part 13, and the cylindrical wall part 18 rising from the thin plate part 12.

When the cylindrical wall part 18 is molded, excess metal flows from the reduced thickness part K1a into both thick plate part 13 and cylindrical wall part 18, leading to molding of the stabilized cylindrical wall part 18. At this stage, since the stabilized cylindrical wall part 18 can be molded, molding steps thereafter can be stably performed. This feature enables a shape of the explosion-proof valve and an operating pressure to be stabilized.

Here, when spring back occurs after performing the extension molding step S2, a correcting step of adjusting a shape may be performed.

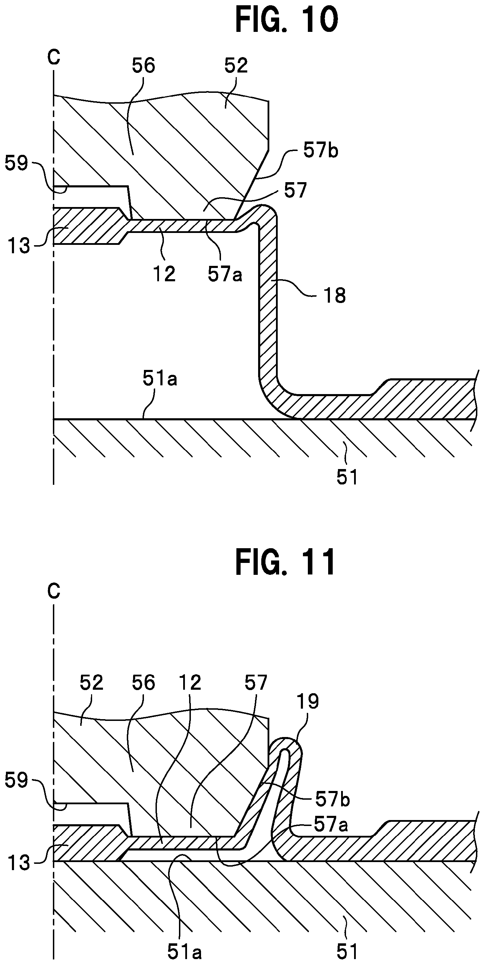

As shown in Figs. 10 and 11, the bending step S3 is a step of molding a bent part 19 which is finally to be a folded part. In the bending step S3, a second lower mold 51 and a bending punch 52 are used.

The second lower mold 51 includes a flat pressing face 51a. The bending punch 52 includes a body part 56 and a peripheral wall part 57. The peripheral wall part 57 is a wall part protruding downward from the body part 56 with a trapezoidal cross-section. The peripheral wall part 57 has a circular shape in plan view (i.e., a ring shape). Inside the peripheral wall part 57, a second hole part 59 having a circular shape in plan view is formed. The second hole part 59 is a hollow part designed to avoid interference with the thick plate part 13. That is, the second hole part 59 is formed having a depth that prevents interference with the thick plate part 13. On the peripheral wall part 57, a taper face 57b is formed inclining so that a diameter of the taper face 57 is larger as being apart from the pressing face 57a. An outer diameter of the pressing face 57a is smaller than an inner diameter of the cylindrical wall part 18.

As shown in Fig. 10, in the bending step S3, while the pressing face 57a and the taper face 57b of the peripheral wall part 57 are pressing the thin plate part 12 downward, those faces 57a and 57b together with the pressing face 51a of the second lower mold 51 sandwich the thin plate part 12 as shown in FIG. 11. Thereby, the cylindrical wall part 18 is slightly enlarged outward and bent so as to mold a bent part 19. At this time, the thick plate part 13 is positioned at a hollow part thus formed by the second hole part 59 and the pressing face 51a.

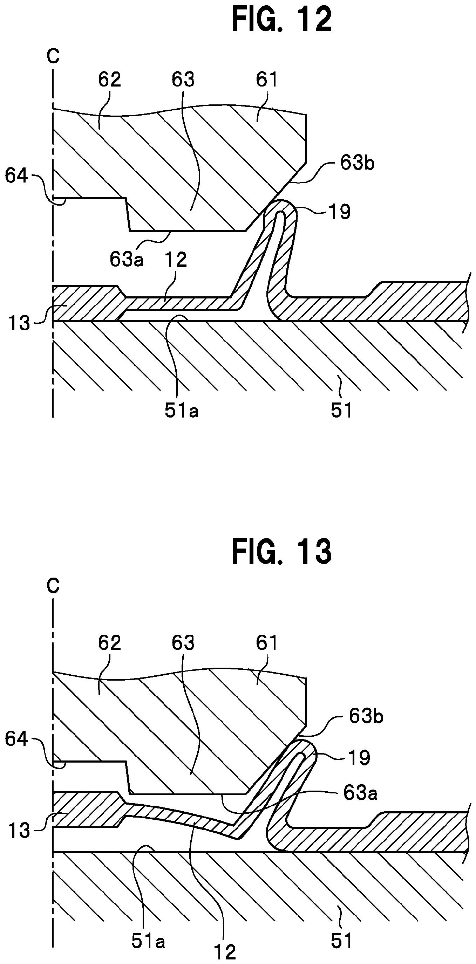

As shown in Figs. 12 and 13, the preliminary folding step S4 is a step of preliminarily folding the bent part 19 while the bent part 19 is being enlarged outward. In the preliminary folding step S4, the second lower mold 51 and the folding punch (or first folding punch) 61 are used.

The second lower mold 51 has the same shape as mentioned before. A folding punch 61 includes a body part 62 and a peripheral wall part 63. The peripheral wall part 63 is a wall part protruding downward from the body part 62 having a trapezoidal shape in cross-section. The peripheral wall part 63 has a circular shape in plan view (or a ring shape). Inside the peripheral wall part 63, a second hole part 64 is formed with a circular shape in plan view. The second hole part 64 is a hollow part to avoid interference with the thick plate part 13. That is, the second hole part 64 is formed with a depth that prevents interference with the thick plate part 13. On the peripheral wall part 63, a taper face 63b is formed inclining so that a diameter of the taper face 63b is larger as being apart from the pressing face 63a. An interior angle formed by the taper face 63a and the pressing face 63a is larger than that formed by the taper face 57b (refer to Fig. 10) and the pressing face 57a. As shown in Fig. 12, the taper face 63b contacts with a top of the bent part 19 before being pressed.

As shown in Fig. 12, in the preliminary folding step S4, the bent part 19 is preliminarily folded. That is, in the preliminary folding step S4, a top of the bent part 19 is made to contact with the taper face 63b. Then, while the taper face 63b is pressing the bent part 19, the second lower mold 51 and the folding punch 61 are made close each other. As shown in Fig. 13, a proximity distance between the second lower mold 51 and the folding punch 61 may be appropriately adjusted. The pressing face 63a of the peripheral wall part 63 may be apart from the thin plate part 12. In the preliminary folding step S4, the bent part 19 is further inclined and folded.

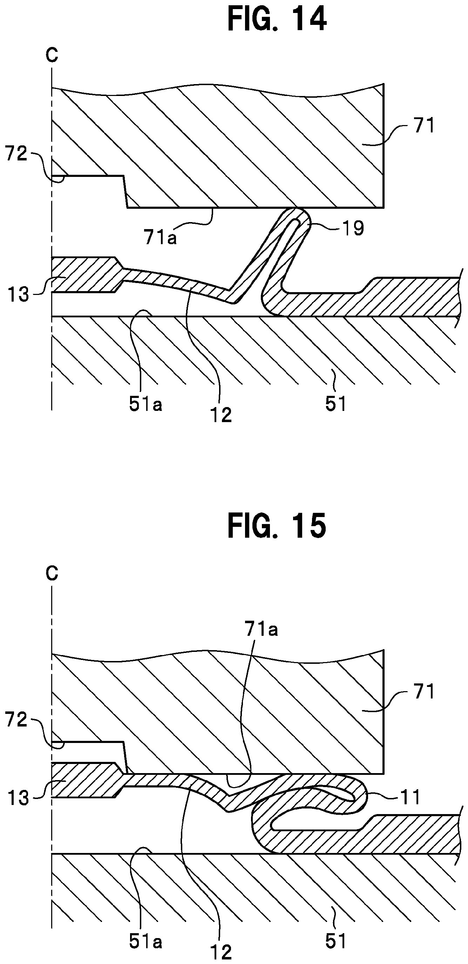

As shown in Figs. 14 and 15, the main folding step S5 is a step of molding a folded part 11. In the main folding step S5, the second lower mold 51 and a folding punch (a second folding punch) 71 are used.

The second lower mold 51 has the same shape as described before. The folding punch 71 includes a flat pressing face 71a, and a second hole part 72 formed near the center C of the pressing face 71a. the second hole part 72 is a hollow part designed to avoid interference with the thick plate part 13. That is, the second hole part 72 is formed with a depth that prevents interference with the thick plate part 13. An outer diameter of the folding punch 71 is sufficiently large to press the top position of the bent part 19.

As shown in Fig. 14, in the main folding step S5, the bent part 19 is really folded. That is, while the bent part 19 is pressed in a state that a top of the bent part 19 is made to contact with a pressing face 71a of the folding punch 71, the second lower mold 51 and the folding punch 71 are made close each other. As shown in Fig. 15, this process brings the folded part 11 made by folding the bent part 19 to be molded. At this time, the thick plate part 13 is positioned in a hollow part formed by the second hole part 72 and the pressing face 51a.

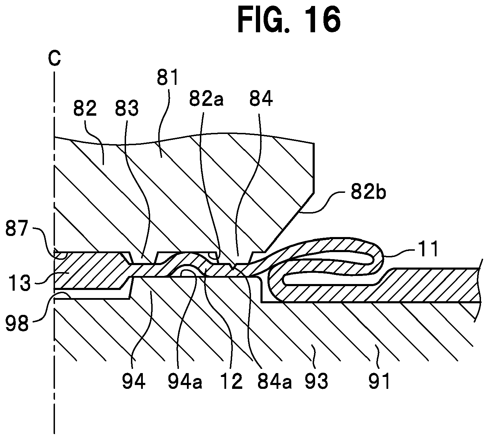

As shown in Fig. 16, the breaking groove molding step S6 is a step of molding the breaking groove 14 (refer to Fig. 3). In the breaking groove molding step S6, a third lower mold 91 and a third upper mold 81 are used.

The third lower mold 91 includes a body part 93, a peripheral wall part 94 and a first hole part 98. The peripheral wall part 94 is a part with a rectangular cross-section protruding upward in a ring shape from the body part 93. The peripheral wall part 94 faces a first protrusion part 83 and a second protrusion part 84 both described hereinafter. The first hole part 98 is a hollow part designed to avoid interference with the thick plate part 13. That is, the first hole part 98 is formed with a depth that prevents interference with the thick plate part 13.

The third upper mold 81 includes a body part 82, a first protrusion part 83 and a second protrusion part 84. The first protrusion part 83 protrudes downward from an end face 82a of the body part 82. The first protrusion part 83 has a trapezoid cross-section and a diameter thereof is reduced toward a lower position. The first protrusion part 83 has a circular shape in plan view (or a ring shape). Inside the first protrusion part 83, a second hole part 87 is formed. The second hole part 87 is a hollow part designed to avoid interference with the thick plate part 13. That is, the second hole part 87 is formed with a depth that prevents interference with the thick plate part 13.

The second protrusion part 84 protrudes downward from an end face 82a of the body part 82. The second protrusion part 84 is provided outside the first protrusion part 83 and has a trapezoid cross-section. A diameter thereof is reduced toward a lower position. The second protrusion part 84 has a circular shape in plan view (or a ring shape). On a distal face of the second protrusion part 84, a protrusion 84a having a triangle cross-section is formed to mold a breaking groove 14. On a circumferential surface of the body part 82, a taper face 82b is formed inclining so as not to interfere with the folded part 11.

As shown in Fig. 16, in the breaking groove molding step S6, while sandwiching and pressing the thin plate part 12 by the third lower mold 91 and the third upper mold 81, the breaking groove 14 is molded on an upper surface of the thin plate part 12. Further, the convex part 15 (refer to Fig. 3) is molded between the first protrusion part 83 and the second protrusion part 84 along a circumferential direction. Herein, the battery case lid 102 is formed as mentioned hereinbefore. It should be noted that a method for producing a battery case member (e.g., a battery case lid) is not limited to the above described steps and the order of the steps. The method can be appropriately changed in design.

The method for producing the battery case 100 and the battery case member (e.g., a battery case lid) according to the present embodiment described hereinbefore exerts the following effects. An arrangement of the thick plate part 13 in the middle of the explosion-proof valve 2 enables the thick plate part 13 to receive excess metal left in the forge processing. Further, an arrangement of a receiving portion of the excess metal in the middle of the explosion-proof valve 2 enables the excess metal to be efficiently released. Those arrangements allow a thickness and shape of the thin plate part 12 to be easily stabilized. As a result, the explosion-proof valve 2 can reliably ruptures when abnormality in pressure occurs. Accordingly, it is possible to preferably correspond to increases in size and thickness of the battery case 100.

Further, as shown in the present embodiment, it is preferable that the folded part 11, the thin plate part 12 and the thick plate part 13 have a circular shape. Moreover, as shown in the embodiment, preferably a shape of the thick plate part 13 is similar to those of the folded part 11 and the thin plate part 12. Adjusting the shapes as mentioned above can avoid stress concentration, allowing the explosion-proof valve 2 to more reliably rupture when abnormality in pressure occurs.

Further, in the breaking groove 14, a width thereof is made to become larger toward a direction to which an internal pressure of the battery case 100 is applied (i.e., an upper direction in the present embodiment). This configuration can easily make the breaking groove 14 deformed toward a direction that a width of the groove is easily enlarged when the internal pressure is exerted. Thus, those features can surely cause the explosion-proof valve 2 to rupture.

Further, in the present embodiment, when an internal pressure of a battery fluctuates due to repeated charging and discharging of the battery, the folded part 11 can absorb the fluctuation of the internal pressure by deformation of the folded part 11 toward the inside and outside of the battery case 100 (i.e., a plate thickness direction of the battery case lid 102). Thereby, excessive tensile stress is not exerted on the breaking groove 14, and the breaking groove 14 can hardly wear out readily. Therefore, the breaking groove 14 dose not rupture except for when the internal pressure reaches a level that exceeds normal rises in pressure caused by charging and rises in the environment temperature. As a result, an operating pressure of the explosion-proof valve 2 can be stabilized.

Further, the breaking groove 14 is formed on the thin plate part 12 which is easily deformed. Thereby, when the thin plate part 12 is expanded outward (i.e., upward) with respect to the case, compressive stress is first exerted thereon. Then, tensile stress is further added thereto, leading to a rupture of the breaking groove 14. Therefore, the breaking groove 14 surely ruptures even though a thickness w of a groove bottom part is thick to a certain degree (refer to Fig. 4) . As a result, since strength of the breaking groove 14 can be increased, the breaking groove 14 can avoid rupturing when a secondary battery is assembled. This feature allows the battery case 100 to be easily handled.

Further, in the present embodiment, a two stage pressuring processes occur including a deformation of the folded part 11 at the first stage and a rupture of the breaking groove 14 at the second stage. This two stage pressuring processes provide a lot of parameters for setting the operating pressure such as the thickness w and shape of the groove bottom part of the breaking groove 14 and the shape of the thin plate part 12 or the like. This feature allows the operating pressure to be set to any desired level. Here, the thin plate part 12 may have a curved shape as the entire portion. This curved shape allows the thin plate part 12 to be more easily deformed to absorb a pressure.

Further, in the present embodiment, the folded part 11 with an increased thickness thus molded by folding the metal plate is formed around the explosion-proof valve 2. This feature can reinforce a circumference of the explosion-proof valve 2. Moreover, the folded part 11 can shield heat generated by welding. This feature can decrease heat input to the explosion-proof valve 2 when the case 101 and the battery case lid 102 are welded. Further, the folded part 11 can be molded only by folding the metal plate K, allowing easier manufacturing operation.

Further, the second lower mold 51 can be commonly used in the bending step S3, the preliminary folding step S4 and the main folding step S5, allowing efficient molding processes. Moreover, in the extension molding step 2, the thick plate part 13 can be molded by the first cavity 44 and the second cavity 48 while performing backward extrusion molding. This process enables the thick plate part 13 to be easily molded while controlling excess metal. Further, after the thick plate part 13 is molded, it is possible to avoid interference between the thick plate part 13 and each molding die, allowing the thick plate part 13 to be more precisely molded.

### [Second Embodiment]

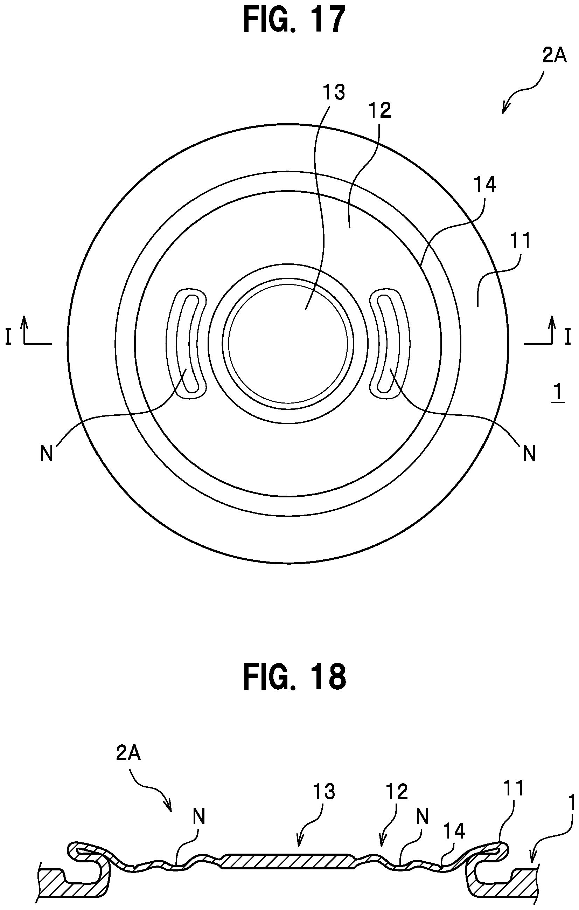

Next, a method for producing a battery case and a battery case member (i.e., a battery case lid) according to the second embodiment in the present invention will be explained. As shown in Fig. 17, there is a difference from the first embodiment that concave grooves N, N are formed at an explosion-proof valve 2A in the battery case lid according to the second embodiment. In the present embodiment, portions different from those of the first embodiment will be mainly described.

As shown in Figs. 17 and 18, the explosion-proof valve 2A includes a folded part 11, a thin plate part 12, a thick plate part 13, a breaking groove 14 and concave grooves N, N. The concave grooves N, N are respectively formed in arc shaped grooves recessed downward and located between the thick plate part 13 and the breaking groove 14. The concave grooves N, N are formed sandwiching the thick plate part 13 at line-symmetrical positions. Shapes, the number and arrangements of the concave grooves N, N may be appropriately set. In the present embodiment, a curvature of the concave grooves N, N is identical to that of the folded part 11 and the thick plate part 13.

Here, although illustrating specific drawings will be omitted, for an example, the concave grooves N, N can be molded by providing a concave part and a convex part with the corresponding molding dies in the extension molding step S2 or the breaking groove molding step S6.

As shown in the present embodiment, providing the concave parts N, N in addition to the breaking groove 14 enables the operating pressure and the rupturing spot to be easily controlled. That is, shapes, sizes, positions of the concave grooves N, N can be appropriately set corresponding to the operating pressure and the rupturing spot. Further, making the curvature of the concave grooves N N identical to that of the folded part 11 and the thick plate part 13 enables the operating pressure and the rupturing spot to be more easily controlled.

### [Third Embodiment]

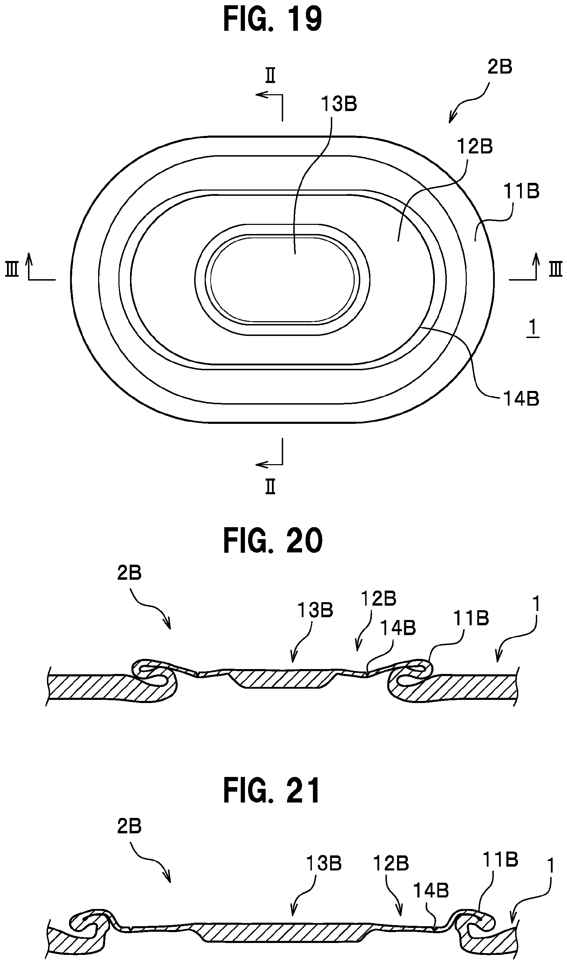

Next, a method for producing a battery case and a battery case member (i.e., a battery case lid) according to the third embodiment of the present invention will be described. As shown in Fig. 19, there is a difference from the first embodiment that an explosion-proof valve 2B has an elliptical shape in the battery case lid according to the third embodiment. In the present embodiment, portions different from those of the first embodiment will be mainly described.

As shown in Figs. 19-21, the explosion-proof valve 2B includes a folded part 11B, a thin plate part 12B, a thick plate part 13B, and a breaking groove 14B. Each of the folded part 11B, the thin plate part 12B, the thick plate part 13B and the breaking groove 14B has an elliptical shape in plan view. Further, a shape of the thick plate part 13B is similar to or generally similar to shapes of the folded part 11B, the thin plate part 12b and the breaking groove 14B.

As shown in Figs. 20 and 21, with respect to a height of the folded part 11B, a height of a short side thereof (see Fig.21) is a slightly greater than that of a long side thereof (see Fig. 20). In the explosion-proof valve 2B, the long side of the folded part 11 has lower rigidity than the short side thereof. Thereby, the long side is more easily deformed than the short side. Thus, the long side tends to rupture first rather than the short side.

As shown in the present embodiment, the explosion-proof valve 2B may have an ellipse shape. When the explosion-proof valve 2B has an ellipse shape, a feature that the long side tends to rupture first rather than the short side can be used to control the operating pressure and the rupturing spot.

### [Operating Pressure Test / Tolerance Test]

Next, an operating pressure test and a tolerance test will be described. Test samples of the explosion-proof valve 2 (i.e., a circular shaped explosion-proof valve) of the first embodiment and the explosion-proof valve 2A (a circular shaped explosion-proof valve including the concave grooves N, N) of the second embodiment were prepared to measure operating pressures.

In the operating pressure test, ten test samples were prepared respectively with respect to the explosion-proof valve 2 and the explosion-proof valve 2A, and operating pressures were measured. The explosion-proof valve 2 had a mean value of operating pressures: 0.626 MPa, a maximum value thereof: 0.642 Mpa and a minimum value thereof: 0.618 Mpa.

The explosion-proof valve 2A had a mean value of operating pressures: 0.728 Mpa, a maximum value thereof: 0.758 Mpa, and a minimum value thereof: 0.672 Mpa. The operating pressures of the explosion-proof valve 2A were higher than those of the explosion-proof valve 2.

In the tolerance test, four test samples of the explosion-proof valve 2 and six test samples of the explosion-proof valve 2A were prepared. Then, increases and decreases in pressure were conducted for 100,000 times (i.e., 100,000 cycles) in a predetermined numerical range of values lower than the operating pressure to be set. As a result, ruptures of the explosion-proof valve 2 and the explosion-proof valve 2A were not observed. Further, operating pressures after conducting the tolerance test were measured for the respective test samples. The explosion-proof valve 2 had a mean value of operating pressures: 0.633 Mpa, a maximum value thereof: 0.640 Mpa, and a minimum value thereof: 0.626 Mpa. The explosion-proof valve 2A had a mean value of operating pressures: 0.706 Mpa, a maximum value thereof: 0.735 Mpa, and a minimum value thereof: 0.637 Mpa. Large changes in the operating pressures before and after the tolerance test were not observed, and good results were obtained.

Although the embodiments of the present invention have been described above, the present invention is not limited to those embodiments described above. Modifications and variations of the embodiments described above can be made in a range without departing from the scope of the present invention. For example, a cross-sectional shape of the breaking groove 14 may be other shapes in addition to a V shape. Further, the preliminary folding step may be omitted or the bent part 19 may be folded divided into three times and more.

### REFERENCE CHARACTERS

- 100: battery case
- 101: case
- 102: battery case lid
- 1: plate part
- 2: explosion-proof valve
- 11: folded part
- 12: thin plate part
- 13: thick plate part
- 14: breaking groove
- 41: extension molding die
- 42: extension molding punch
- 43: concave part
- 44: first cavity
- 48: second cavity
- K: metal plate
- N: concave groove

## Claims

1. A battery case made of metal provided with an explosion-proof valve, the explosion-proof-valve comprising:
a folded part which is continuous with a plate part configuring the battery case and formed by folding the plate part,
a thin plate part which is continuous with the folded part and arranged inside the folded part,
a thick plate part which is continuous with the thin plate part and formed thicker than the thin plate part in a middle of the explosion-proof valve, and
a breaking groove which is arranged in the thin plate part and configured to rupture when a predetermined pressure is exerted thereon.

2. The battery case according to claim 1, wherein the folded part and the thin plate part have a circular shape or an elliptical shape.

3. The battery case according to claim 1, wherein a shape of the thick plate part is similar to shapes of the folded part and the thin plate part.

4. The battery case according to claim 1, wherein a concave groove having an arc shape is formed outside the thick plate part.

5. The battery case according to claim 1, wherein a thickness of the thick plate part is in a range from 1/1.1 to 1/2 of a thickness of the plate part.

6. The battery case according to claim 1, wherein an area of the thick plate part is in a range from 1/5 to 1/10 of an area of the thin plate part.
